# FASCICULE DE BREVET EUROPEEN

(11) **EP 3 957 104 B1**
(45) Date de publication et mention de la délivrance du brevet: **18.09.2024**
(21) Numéro de dépôt: 20719558.7
(22) Date de dépôt: 02.04.2020
(51) Int. Cl.: H04W 64/00, H04W 36/00, H04W 36/32, H04W 36/08

(54) **PROCÉDÉ DE PRÉDICTION D'UNE MODIFICATION DES CONDITIONS D'ATTACHEMENT D'UN TERMINAL À UN RÉSEAU CELLULAIRE**
VERFAHREN ZUR VORHERSAGE EINER MODIFIZIERUNG DER VERKNÜPFUNGSBEDINGUNGEN EINES ENDGERÄTS MIT EINEM ZELLULAREN NETZWERK
METHOD FOR PREDICTING A MODIFICATION OF THE LINKAGE CONDITIONS OF A TERMINAL TO A CELLULAR NETWORK

(30) Priorité: 15.04.2019 FR 1903995
(43) Date de publication de la demande: 23.02.2022
(73) Titulaire: Continental Automotive Technologies GmbH, 30175 Hannover (DE)
(72) Inventeur: PIRIOU, Simon, 31100 TOULOUSE (FR); VIAL, Grégory, 31100 TOULOUSE (FR)
(74) Mandataire: Continental Corporation France
(86) Numéro de dépôt international: PCT/EP2020/059363
(87) Numéro de publication internationale: WO 2020/212150

(56) Documents cités:
- CN-A- 105 873 137
- CN-A- 107 801 157
- GB-A- 2 354 387
- US-A1- 2012 178 455
- US-A1- 2014 288 811
- US-A1- 2015 073 702
- LI JING ET AL: "Improving positioning accuracy of vehicular navigation system during GPS outages utilizing ensemble learning algorithm", INFORMATION FUSION, ELSEVIER, US, vol. 35, 18 August 2016 (2016-08-18), pages 1 - 10, XP029813297, ISSN: 1566-2535, DOI: 10.1016/J.INFFUS.2016.08.001

## Description

### Domaine technique

L'invention concerne le domaine des véhicules connectés. Elle concerne en particulier un dispositif et un procédé pour prédire une modification des conditions d'attachement d'un véhicule à un réseau cellulaire.

### Technique antérieure

La disponibilité d'une connexion à un réseau de communication est une problématique croissante dans le domaine des transports. En particulier, les véhicules connectés nécessitent qu'une connexion soit disponible pour transmettre ou recevoir des données, comme par exemple des cartes routières, des informations sur le trafic ou encore des prévisions météo locales.

Or, malgré les efforts des opérateurs de télécommunications, la couverture réseau du territoire n'est pas homogène : certaines zones sont couvertes par des technologies d'accès cellulaire haut débit de type 4G ou 3G, d'autres par des technologies bas débit de type GSM, GPRS ou EDGE. En outre, certaines zones, dites « zones blanches », ne sont pas couvertes par un réseau cellulaire. Ainsi, la couverture d'un territoire est souvent hétérogène en termes de débit disponible. Par conséquent, lorsqu'un véhicule connecté effectue un parcours sur un réseau routier, il est confronté à différentes qualités de service.

Dans le but d'offrir une expérience satisfaisante pour les occupants d'un véhicule connecté se déplaçant sur un réseau routier, il peut être intéressant de retarder l'accès à certains services en ligne lorsque les conditions réseau ne sont pas optimales, ou à l'inverse, d'anticiper le téléchargement de certaines données tant que les conditions sont optimales. Dans cette perspective, il est avantageux pour un véhicule connecté de savoir à quel moment les conditions de connexion sont susceptibles de changer lors d'un parcours.

Pour cela, il est connu d'utiliser des cartes de couverture réseau produites à partir de données de répartition des points d'accès cellulaires disponibles sur un territoire. Ces cartes sont construites à partir de modèles de propagation de signaux radioélectriques, d'emplacement des antennes relais et de technologies d'accès qu'elles mettent en oeuvre, et de données topographiques. En faisant correspondre des cartes routières avec de telles cartes de couverture, on peut déduire la qualité de connexion susceptible d'être rencontrée par un véhicule au cours d'un trajet.

Ces cartes restent toutefois peu précises, notamment en ce qui concerne l'emplacement des points de handover (transfert intercellulaire). Le handover est le processus qui permet à un terminal mobile, comme un véhicule connecté, de changer son point d'attachement à un réseau cellulaire. Un handover est par exemple nécessaire lorsqu'un véhicule connecté quitte la zone de couverture d'une cellule courante, ou quand le nombre de terminaux mobiles dans la cellule est trop important, au point de saturer la cellule. Un handover peut se produire entre deux cellules de même technologie, ou bien entre cellules de technologies différentes. Le handover peut être à l'initiative du terminal ou bien à l'initiative du réseau.

Le handover étant un processus dynamique, les cartes de couverture ne permettent pas toujours de déterminer de manière fiable où et quand se produira un prochain handover, ni le point d'accès auquel sera connecté le véhicule. Par exemple, un handover depuis un point d'accès A vers un point d'accès B pour un véhicule se déplaçant selon une direction particulière sur un axe routier n'aura pas forcément lieu au même emplacement qu'un handover depuis le point d'accès B vers le point d'accès A pour un autre véhicule se déplaçant dans la direction opposée sur le même axe routier.

Pourtant, connaître précisément l'emplacement auquel un véhicule connecté sera déconnecté de la cellule courante, et les caractéristiques de connexion qui suivront cette déconnexion peuvent permettre à un véhicule connecté d'optimiser l'accès à des ressources en ligne.

Il existe donc un besoin pour une solution permettant de prévoir précisément une modification à venir des conditions d'attachement d'un véhicule connecté à un réseau cellulaire.

US 2012178455 divulgue un procédé permettant de prédire par une station de base et à partir de la position, de la vitesse, du déplacement ou de la direction de déplacement d'un équipement de l'utilisateur (UE), la position de l'UE au moment du transfert de cellule.

### Exposé de l'invention

Compte tenu de ce qui précède, un but de l'invention est de déterminer, pour un véhicule connecté à un point d'accès courant circulant sur un réseau routier, au moins une caractéristique d'une prochaine modification des conditions d'attachement à un réseau cellulaire

Un but de l'invention est encore de déterminer, pour un véhicule connecté à un point d'accès courant et circulant sur un réseau routier, une localisation géographique à laquelle le véhicule sera déconnecté du point d'accès courant.

Un autre but de l'invention est de déterminer une caractéristique de connexion du véhicule après sa déconnexion du point d'accès courant. La présente invention est définie par les revendications 1 à 6.

A cet égard, il est proposé un procédé de prédiction, pour un véhicule circulant sur un réseau routier connecté à un point d'accès courant d'un réseau cellulaire, d'au moins une caractéristique associée à une prochaine modification des conditions d'attachement audit réseau cellulaire, selon la revendication 1.

Ainsi, le procédé propose que soient collectées des données participatives en provenance de véhicules pour entrainer de façon supervisée un modèle de prédiction. Ces données comprennent au moins une première localisation, une direction et une vitesse du véhicule lorsqu'il est connecté à un point d'accès courant, et sont complétées lorsqu'une déconnexion du véhicule du point d'accès courant est détectée, par une seconde localisation à laquelle s'est produite la déconnexion. La déconnexion est par exemple due à un handover vers un prochain point d'accès ou à l'entrée du véhicule dans une zone blanche.

Le handover étant un processus dynamique, l'emplacement auquel il se produit dépend des caractéristiques de déplacement du véhicule.

Le processus de handover nécessite des échanges de messages entre le véhicule et le réseau cellulaire. Ces échanges prenant nécessairement un certain temps, la vitesse de déplacement du véhicule à une influence sur la localisation à laquelle le handover est réalisé. Il existe ainsi une corrélation entre la vitesse d'un véhicule et des possibles localisations auxquelles le véhicule sera déconnecté du point d'accès courant.

La localisation à laquelle un véhicule connecté circulant sous couverture d'un point d'accès courant sera déconnecté de ce point d'accès dépend en outre de la direction suivie par ce véhicule. En effet, on comprend qu'un second véhicule circulant dans une direction opposée à un premier véhicule quittera le point d'accès courant à un emplacement différent du premier véhicule. Il existe ainsi une corrélation entre la direction d'un véhicule et des localisations possibles de déconnexion.

Les véhicules, contrairement aux piétons, ont la particularité de circuler sur des axes de circulation déterminés. Ainsi, la localisation et la direction d'un véhicule déterminent une position future de ce véhicule, car son déplacement est contraint par le tracé d'une route. Il existe ainsi une corrélation entre la position courante d'un véhicule et des possibles localisations de déconnexion.

C'est pourquoi, en entrainant un modèle de prédiction associé à un point d'accès particulier avec des positions, des vitesses et des directions de véhicules d'entrainement connectés à ce point d'accès particulier, associées à une localisation à laquelle ces véhicules quittent le point d'accès, on obtient un modèle capable de prédire précisément l'emplacement auquel se produira la déconnexion d'autres véhicules, à partir de leur localisation, de leur vitesse et de leur direction. En effet, ces caractéristiques de déplacement d'un véhicule d'entrainement permettent au modèle d'établir des corrélations avec des caractéristiques de déplacement d'un autre véhicule se déplaçant sous couverture du même point d'accès, et d'en déduire la localisation d'une prochaine déconnexion du point d'accès courant pour cet autre véhicule.

Connaissant la localisation à laquelle il sera déconnecté du point d'accès courant, et en combinant cette information avec des données cartographique d'un réseau routier, un véhicule peut avantageusement connaitre la distance pendant laquelle il restera connecté au même point d'accès et en déduire à partir de sa vitesse de déplacement, la durée pendant laquelle une qualité de service associée à ce point d'accès restera disponible.

Selon une réalisation particulière, le procédé est tel que le premier modèle de prédiction est un réseau de neurones perceptron multicouche de régression.

Un réseau de neurones artificiels de type MLP (Multi-Layer Perceptron) et rapide et facile à entrainer. D'autre part, le MLP de régression est ici avantageux car il permet de prédire des valeurs entières, particulièrement adaptées pour décrire une localisation.

Selon un mode de réalisation particulier, le procédé tel qu'il comporte en outre les étapes suivantes :
- Entrainer un second modèle de prédiction à partir de données participatives collectées auprès d'au moins un véhicule d'entrainement, les données comprenant au moins, pour une localisation d'un véhicule d'entrainement connecté à un point d'accès cellulaire courant :
   ∘ Une localisation, une vitesse et une direction du véhicule d'entrainement, et
   ∘ Un identifiant d'un second point d'accès cellulaire obtenu après la détection de sa déconnexion du point d'accès courant,
- Prédire un identifiant d'un prochain point d'accès cellulaire par application du second modèle de prédiction à :
   ∘ Une localisation, une vitesse et une direction du second véhicule.

Le procédé met en oeuvre un second modèle de prédiction entrainé de manière supervisée pour prédire, à partir d'une localisation, d'une vitesse et d'une direction d'un véhicule, un identifiant du prochain point d'accès auquel le véhicule sera connecté quand il aura quitté le point d'accès courant. L'identifiant du point d'accès peut aussi correspondre à un identifiant particulier associé à une zone sans couverture, comme une zone blanche.

Selon la configuration du réseau routier, un véhicule peut circuler en frontière de plusieurs cellules d'un réseau cellulaire, ou transiter ponctuellement dans la zone de couverture d'un point d'accès avant de passer sous couverture d'un autre point d'accès. Comme indiqué précédemment, le processus de handover prend un certain temps. Ainsi, le point d'accès vers lequel s'effectue un handover peut dépendre de la vitesse de déplacement du véhicule, ce dernier pouvant par exemple avoir traversé une zone de couverture avant d'avoir terminé la procédure de handover. Il existe ainsi une corrélation entre la vitesse d'un véhicule et le point d'accès auquel il sera connecté après un handover.

Un réseau cellulaire est par définition constitué d'un ensemble de cellules radio formant un damier. Par conséquent, l'identifiant de la cellule suivante ou d'une zone blanche, dépend de la direction suivie par un véhicule quittant une cellule. Ainsi, il existe ainsi une corrélation forte entre la direction suivie par un véhicule circulant dans une cellule particulière et une cellule adjacente vers laquelle s'effectuera un handover.

Enfin, comme indiqué précédemment, la localisation et la direction d'un véhicule détermine une position future de ce véhicule, car son déplacement est contraint par le tracé d'une route. Il existe ainsi une corrélation entre la position d'un véhicule et de possibles identifiants de points d'accès futurs.

C'est pourquoi, en entrainant un second modèle de prédiction associé à un point d'accès particulier avec des positions, des vitesses et des directions de véhicules d'entrainement connectés à ce point d'accès particulier, auxquelles est associé par exemple un identifiant d'un point d'accès auquel les véhicules d'entrainement se connectent après avoir quitté le point d'accès courant, ou un identifiant de zone blanche, on obtient un modèle capable de prédire précisément l'identifiant d'un point d'accès suivant ou d'une zone blanche à partir de la localisation, d'une vitesse et d'une direction d'un véhicule. En effet, ces caractéristiques de déplacement d'un véhicule d'entrainement permettent au modèle d'établir des corrélations avec des caractéristiques de déplacement d'un autre véhicule se déplaçant sous couverture du même point d'accès, et d'en déduire un identifiant d'un prochain point d'accès ou d'une zone blanche.

Selon une réalisation particulière, le procédé est tel que le premier modèle de prédiction est un réseau de neurones perceptron multicouche de classification.

Un réseau de neurones artificiels de type MLP (Multi-Layer Perceptron) et rapide et facile à entrainer. D'autre part, les sorties d'un MLP de classification associent des indices de confiance aux potentiels points d'accès futurs. Une telle disposition permet l'identification du point d'accès suivant le plus probable lorsqu'un véhicule est susceptible de se connecter à plusieurs points d'accès suivants.

Selon un mode de réalisation particulier, les localisations de véhicules sont des localisations relatives au point d'accès courant.

Ainsi, les localisations de véhicules utilisées pour entrainer le premier et/ou le second modèle de prédiction, ainsi que les localisations de véhicules auxquelles les premiers et/ou seconds modèles sont appliqués ne sont pas des localisations géographiques absolues, mais des données de positionnement par rapport au point d'accès auquel le véhicule est connecté. Par exemple, il s'agit de coordonnées polaires données sous la forme d'un angle et d'une distance par rapport au point d'accès.

Une telle disposition permet au modèle d'établir des corrélations entre des localisations de véhicules plus facilement qu'avec des coordonnées de type longitude/latitude. En effet, une telle disposition permet de restreindre les plages de valeurs reflétant la position d'un véhicule, facilitant ainsi les corrélations spatiales effectuées par le modèle. Le résultat est une phase d'apprentissage plus efficace dont la durée est réduite.

Selon une réalisation particulière, les premier et/ou le second modèles sont en outre entrainés à partir d'une première date de collecte des données participatives, les prédictions correspondantes étant réalisées par application d'une date aux des premiers et/ou seconds modèles.

La prise en compte d'une date et/ou d'une heure à laquelle les données d'entrainement ont été collectées pour entrainer le second modèle de prédiction permet au modèle d'établir des corrélations relatives à la périodicité des caractéristiques soumises. L'intensité du trafic sur un axe routier est variable selon le jour de la semaine et l'heure de la journée. Un trafic dense peut occasionner une saturation d'un premier point d'accès auquel le véhicule se serait connecté en temps normal, et l'obliger à se connecter à un second point d'accès lorsqu'il quitte un point d'accès courant. Ainsi, la date et/ou l'heure est une caractéristique pertinente pour déterminer un point d'accès vers lequel un véhicule sera connecté en quittant une cellule courante, et par conséquent une localisation de handover.

Selon un autre aspect, l'invention concerne un dispositif de prédiction, pour un véhicule connecté à un point d'accès cellulaire courant circulant sur un réseau routier, d'au moins une caractéristique associée à une prochaine modification des conditions d'attachement audit réseau cellulaire, selon la revendication 5.

Selon un mode particulier de réalisation, le dispositif est tel que les instructions contenues dans la mémoire sont en outre configurées pour mettre en oeuvre :
- Un module d'entrainement d'un second modèle de prédiction à partir de données participatives collectées auprès d'au moins un véhicule d'entrainement, les données comprenant au moins, pour une localisation d'un véhicule d'entrainement connecté à un point d'accès cellulaire courant :
   ∘ Une localisation, une vitesse et une direction du véhicule d'entrainement, et
   ∘ Un identifiant d'un second point d'accès cellulaire obtenu après la détection de sa déconnexion du point d'accès courant,
- Un module de prédiction d'un identifiant d'un prochain point d'accès cellulaire par application du second modèle de prédiction à :
   ∘ Une localisation, une vitesse et une direction du second véhicule.

Les différents modes ou caractéristiques de réalisation précités peuvent être ajoutés indépendamment ou en combinaison les uns avec les autres, aux étapes du procédé de prédiction. Les dispositifs et véhicules présentent au moins des avantages analogues à ceux conférés par les procédés auxquels ils se rapportent.

### Brève description des dessins

D'autres caractéristiques, détails et avantages de l'invention apparaîtront à la lecture de la description détaillée ci-après, et à l'analyse des dessins annexés, sur lesquels :
[Fig. 1] La figure 1 illustre un contexte de mise en oeuvre du procédé de prédiction selon un mode particulier de réalisation,
[Fig. 2] La figure 2 illustre les principales étapes du procédé de prédiction selon une réalisation particulière,
[Fig. 3a] La figure 3a représente une table d'une base de données adaptée dans laquelle figurent des données d'entrainement transmises par un véhicule connecté à un point d'accès courant,
[Fig. 3b] La figure 3b représente une table d'une base de données adaptée dans laquelle figurent des données d'entrainement transmises par un véhicule après qu'un handover a été détecté,
[Fig. 4] La figure 4 illustre l'architecture d'un dispositif adapté pour mettre en oeuvre le procédé de prédiction selon un mode de réalisation particulier,
[Fig. 5] La figure 5 représente les principales étapes d'un procédé d'obtention d'une caractéristique d'une prochaine modification des conditions d'attachement à un réseau cellulaire, selon une réalisation particulière de l'invention.
[Fig. 6] La figure 6 illustre l'architecture d'un dispositif adapté pour mettre en oeuvre le procédé d'obtention d'une caractéristique de transfert intercellulaire selon un mode de réalisation particulier.

### Description des modes de réalisation

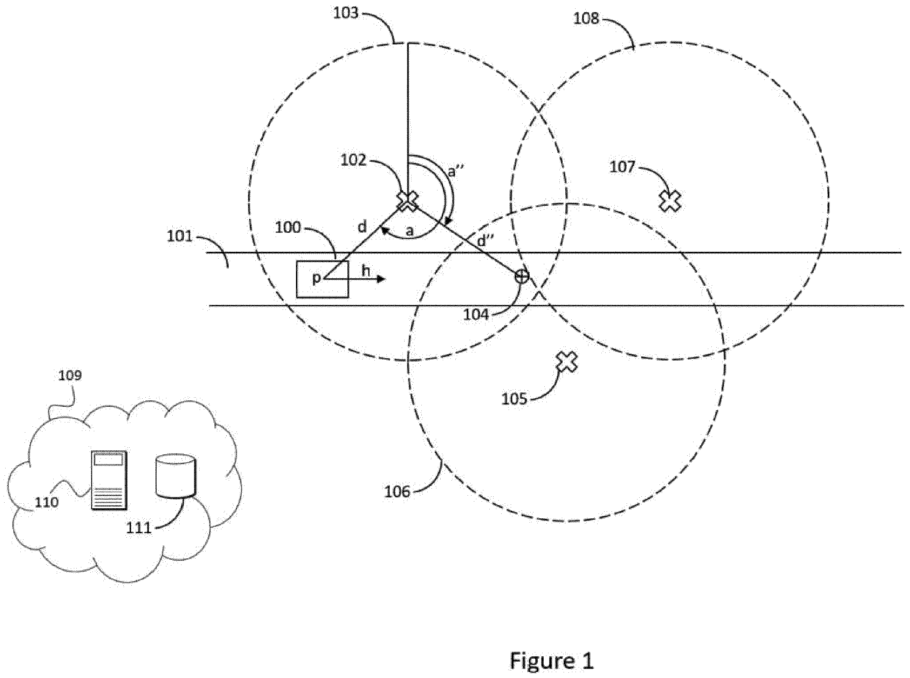

La figure 1 représente un véhicule 100 circulant sur une route 101 selon une direction h. Le véhicule 100 comprend une interface de télécommunication lui permettant de se connecter à un réseau d'accès cellulaire, par exemple un réseau 2G, 3G, 4G, LTE (Long Term Evolution) ou encore un réseau d'accès WiFi ou WiMAX. Par l'intermédiaire d'un tel réseau d'accès, le véhicule 100 peut accéder à un réseau de télécommunication 109 et échanger des données avec d'autres équipements comme le serveur 110.

Le réseau d'accès cellulaire comprend une pluralité de points d'accès 102, 105 et 107 correspondant par exemple à des antennes relais de type BTS (Base Transceiver Station), nodes-B ou eNode-B. La figure 1 montre aussi les zones de couvertures respectives 103, 106 et 108 des points d'accès 102, 105 et 107. Ces zones de couvertures 103, 106 et 108 correspondent par exemple à des cellules du réseau cellulaire. On remarque que les zones de couverture des cellules adjacentes se chevauchent en bordure de cellule. De manière classique, ce chevauchement des zones de couvertures permet me mettre en oeuvre une procédure de transfert intercellulaire (ou handover en anglais) lorsqu'un terminal mobile, comme le véhicule 100, se déplace d'une cellule dans un autre cellule. La procédure de handover permet à un terminal de changer de cellule radio sans interrompre une communication en cours. En effet, lorsque le signal de transmission entre un terminal mobile et un point d'accès s'affaiblit, le terminal mobile cherche une autre station de base disponible dans une autre cellule, qui soit capable d'assurer la poursuite de la communication sans interruption.

Dans le cadre de cette description, on utilisera les termes « point d'accès » pour désigner une cellule radio. Ainsi, une formulation du type « le point d'accès 102 » désigne aussi la zone de couverture 103.

Ainsi, lors de son déplacement sur la route 101 selon la direction h, le véhicule 100 transitera successivement par les cellules 103, 106 et 108 du réseau cellulaire. En quittant la zone de la couverture du point d'accès 107 selon la direction h, le véhicule entrera dans une zone blanche.

Un but de l'invention est de déterminer avec précision la localisation à laquelle le véhicule sera déconnecté du point d'accès courant 102 auquel il est connecté. Par exemple, en référence à la figure 1, le procédé qui va être décrit vise à déterminer une localisation 104 d'un handover à la suite duquel le véhicule 100 va quitter le point d'accès 102 et se connecter à un prochain point d'accès, et à déterminer un identifiant de ce prochain point d'accès. Pour un véhicule circulant sous couverture du point d'accès 107 dans la direction h, le procédé permet de déterminer une localisation géographique à laquelle le véhicule sera déconnecté du point d'accès 107 et un identifiant caractéristique d'une zone sans couverture.

A cet égard, il est proposé un procédé de prédiction d'au moins une caractéristique associée à une prochaine modification des conditions d'attachement audit réseau cellulaire. Le procédé est par exemple mis en oeuvre par un dispositif comportant une mémoire et un processeur configuré par des instructions enregistrées dans la mémoire. Les instructions sont configurées pour mettre en oeuvre les étapes 200 à 206 du procédé qui vont être décrites. Selon un mode particulier de réalisation, le dispositif de prédiction est compris dans le serveur 110 représenté sur la figure 1.

Lors d'une première étape 200, des données participatives sont collectées auprès d'au moins un véhicule d'entrainement.

Au sens de l'invention, un véhicule d'entrainement est un véhicule adapté pour circuler sur un réseau routier, tel qu'une automobile, un camion, un cyclomoteur, un vélo, etc. Il peut également s'agir d'un véhicule de transport en commun terrestre comme un tramway, un bus, un train, etc.

Un véhicule d'entrainement est particulier en ce qu'il est adapté pour enregistrer une localisation géographique, une vitesse et une direction, et obtenir un identifiant du point d'accès auquel il est connecté, et pour transmettre de telles information à un serveur, par exemple au serveur 110. Pour cela, le véhicule comprend par exemple un dispositif de positionnement par satellite de type GNSS, capable de fournir une position sous la forme d'une longitude et d'une latitude, une vitesse et une direction du véhicule, ainsi qu'une interface de communication sans fil lui permettant de se connecter à un réseau de communications et d'échanger des messages avec d'autres équipements.

Considérons par exemple que le véhicule 100 représenté sur la figure 1 est un véhicule d'entrainement. Le véhicule 100 représenté est actuellement connecté au point d'accès 102 et enregistre sa localisation p, sa vitesse et sa direction h.

De préférence, la localisation du véhicule d'entrainement est une localisation relative au point d'accès auquel il est connecté, c'est-à-dire, en référence à la figure 1, une localisation relative au point d'accès 102. Cette localisation est par exemple donnée sous la forme de coordonnées polaires comportant une distance d par rapport au point d'accès et d'un angle a par rapport à une orientation de référence. La position d'un véhicule relative au point d'accès peut être déterminée à partir d'une localisation absolue du véhicule et celle du point d'accès, la position du point d'accès étant obtenue à partir d'un identifiant du point d'accès transmis dans la signalisation et d'une base de données comprenant, pour chaque identifiant de point d'accès, une localisation de la station de base.

Selon une réalisation particulière, lorsqu'un véhicule d'entrainement détecte qu'il est déconnecté d'un point d'accès courant, le véhicule d'entrainement complète l'enregistrement avec la localisation à laquelle la déconnexion a été détectée. Ainsi, les données collectées par un véhicule d'entrainement comprennent au mois : une localisation, une vitesse et une direction du véhicule enregistrées lorsqu'il est connecté à un point d'accès courant, et une localisation du véhicule après qu'un handover ait été détecté, ou après qu'une déconnexion ait été détectée. Selon une réalisation particulière, les données collectées comprennent en outre un identifiant du point d'accès auquel le véhicule est connecté après qu'un handover ait été détecté. L'identifiant du point d'accès est un permet d'identifier le point d'accès de manière unique sur un territoire. Il s'agit par exemple d'une « Cell ID » lorsque le point d'accès est une cellule GSM, un « LCID » dans le cas d'une cellule UMTS, ou un E-CID dans le cas d'une cellule LTE (Long Term Evolution).

Selon une réalisation particulière, un identifiant particulier est affecté aux zones sans couvertures, dites zones blanches. Ainsi, lorsque le véhicule détecte une perte de connexion au point d'accès courant sans qu'une nouvelle connexion soit établie avec un point d'accès suivant, c'est-à-dire lorsque le véhicule a quitté une cellule courante pour entrer dans une zone blanche, les données collectées comprennent en outre un identifiant représentatif d'une zone blanche. Du point de vue du second modèle de prédiction, le fait que l'identifiant corresponde à un point d'accès ou à une zone blanche n'affecte en rien la prédiction. Ainsi, en attribuant un identifiant de cellule « virtuelle » à une zone blanche, le procédé permet de prédire non seulement l'identifiant d'un prochain point d'accès auquel un véhicule sera connecté après une déconnexion, mais aussi le fait que le véhicule va pénétrer dans une zone blanche.

Lorsqu'un véhicule d'entrainement à collecté des données, et lorsqu'une connexion réseau est disponible, le véhicule transmet les données au serveur 110.

Selon une réalisation particulière, un véhicule d'entrainement transmet périodiquement au serveur 110 sa position, sa vitesse, sa direction et l'identifiant d'un point d'accès courant auquel il est connecté. Le serveur 110 mémorise ces informations dans une base de données 111

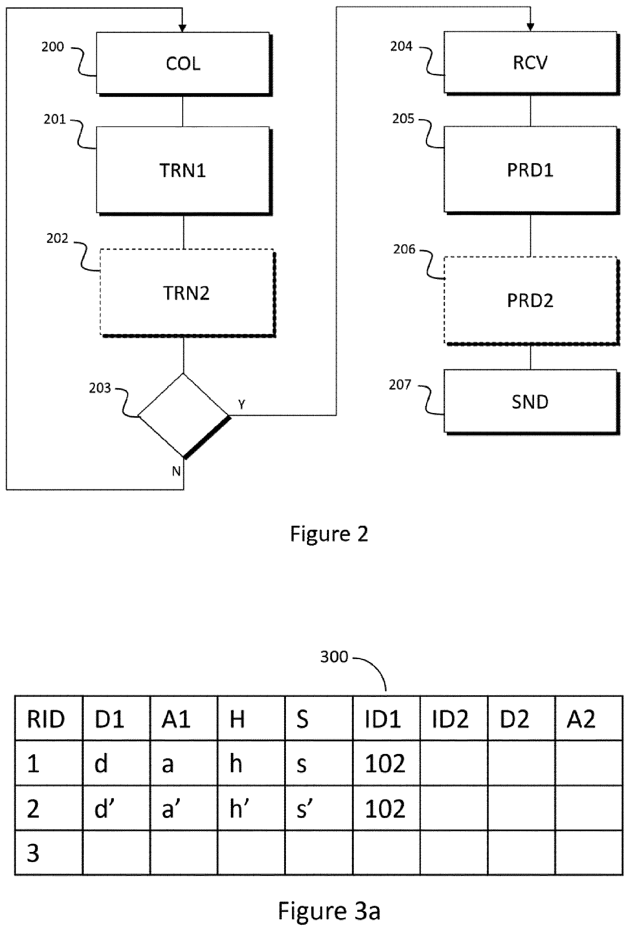

La figure 3a représente une table de la base de données 111. Cette table comprend des champs RID, D1, A1, H, S, ID1 permettant respectivement de mémoriser un identifiant de l'enregistrement, la localisation du véhicule par rapport au point d'accès courant sous la forme d'une distance D1 et d'un angle A1 par rapport au point d'accès, la direction H et la vitesse S du véhicule, ainsi qu'un identifiant ID1 du point d'accès auquel est connecté le véhicule.

La table de la figure 3a comprend 2 enregistrements r1 et r2 collectés par le véhicule 100. Le premier enregistrement r1 a été réalisé alors que le véhicule était connecté au point d'accès 102 et qu'il était à une distance d et un angle a par rapport à ce point d'accès. Le véhicule suivait une direction h à une vitesse s.

Le deuxième enregistrement a été collecté alors que le véhicule était toujours connecté au point d'accès 102, mais à une distance d'et un angle a' par rapport au point d'accès A. Il suivait une direction h' à une vitesse v'.

On remarque que les champs ID2, D2 et A2 ne sont pas renseignés pour ces deux enregistrements.

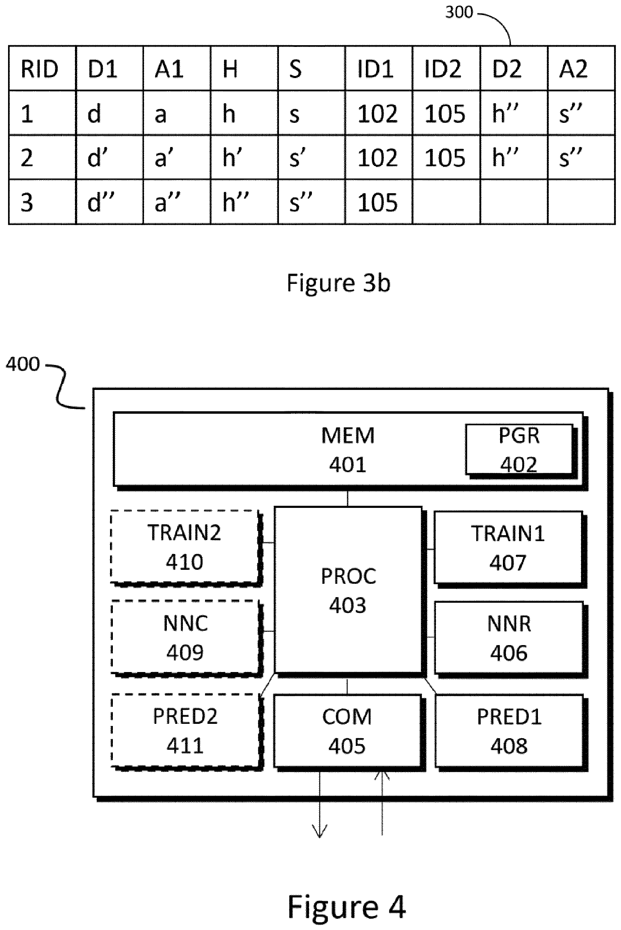

La figure 3b montre la table 300 à laquelle un troisième enregistrement a été ajouté. Ce troisième enregistrement a été collecté alors que le véhicule d'entrainement 100 était à une distance d" et un angle a" par rapport au point d'accès 102, qu'il suivait une direction h" à une vitesse s", et qu'il était connecté à un point d'accès 105. Lorsque le serveur 110 détecte que le point d'accès courant a changé, c'est à dire que la valeur du champ ID1 d'un nouvel enregistrement est différente de la valeur du champ ID1 de l'enregistrement précédent, les valeurs D1, A1 et ID1 sont respectivement recopiées dans les champs D2, A2 et ID2 des premiers et deuxièmes enregistrements.

De cette façon, le serveur peut obtenir des enregistrements comprenant le point d'accès courant ID1, la localisation (D1, A1), la vitesse S, la direction H d'un véhicule d'entrainement, associés à l'identifiant d'un prochain point d'accès ou d'une zone blanche ID2 et une localisation (D2, A2) correspondant à l'emplacement de la prochaine déconnexion.

Lors d'une étape 201, le serveur utilise les données collectées pour entrainer un premier modèle de prédiction associé au point d'accès 102. Le premier modèle de prédiction est par exemple un réseau de neurones de type perceptron multicouche de régression. Les données d'entrainement comprennent au moins :
- Une localisation (D1, A1) du véhicule d'entrainement,
- Une direction (H),
- Une vitesse (S),
- Et une localisation (D2, A2) à laquelle une déconnexion de la cellule courante a été détectée.

Selon une réalisation particulière, lors d'une étape 202, le serveur utilise en outre des données collectées pour entrainer un deuxième modèle de prédiction associé au point d'accès 102. Ce deuxième modèle de prédiction est par exemple un réseau de neurones de type perceptron multicouche de classification. Les données d'entrainement du deuxième modèle comprennent au moins :
- Une localisation (D1, A1) du véhicule d'entrainement,
- Une direction (H),
- Une vitesse (S),
- Un identifiant (ID2) d'un prochain point d'accès ou d'une zone blanche.

Selon une réalisation particulière, le procédé comprend une étape 203 de détermination de fin d'entrainement. La fin de l'entrainement peut par exemple être déterminé par comparaison d'un nombre de données d'apprentissage soumises en entrée du modèle avec un seuil. Ainsi, tant qu'un nombre suffisant de données n'a pas été fourni au modèle, l'apprentissage continue.

A l'étape 204, lorsque la phase d'apprentissage est terminée, le serveur 110 reçoit une requête de détermination d'un emplacement de déconnexion de la cellule courante. Il s'agit par exemple d'un message envoyé par un véhicule de tourisme circulant sous la couverture du point d'accès 102. Le véhicule obtient sa position, sa vitesse et sa direction à partir d'un dispositif de localisation par satellite et un identifiant du point d'accès courant auquel il est connecté au moyen d'une interface de communication cellulaire. Le véhicule transmet ces informations au serveur 110 afin d'obtenir la localisation à laquelle il sera déconnecté du point d'accès 102. Comme on l'a vu, cette information peut être utile au véhicule pour planifier par exemple l'accès à des contenus volumineux.

Selon une réalisation particulière, la requête peut en outre comporter une demande de détermination d'un identifiant du prochain point d'accès auquel il sera connecté.

Le serveur utilise applique les données reçues au premier modèle de prédiction lors d'une étape 205. Le serveur détermine le premier modèle de prédiction associé au point d'accès auquel le véhicule est connecté et applique ce modèle aux données transmises par le véhicule. Selon une réalisation particulière, lorsque la position du véhicule est transmise sous la forme d'une longitude et d'une latitude, et lorsque le premier modèle de prédiction a été entrainé à partir de localisations relatives à un point d'accès, le serveur effectue au préalable une requête vers une base de données afin d'obtenir la localisation du point d'accès auquel le véhicule est connecté et converti la position du véhicule en coordonnées polaires relatives à ce point d'accès.

L'application du premier modèle de prédiction, entrainé à l'étape 201, à ces données, permet au serveur de prédire la localisation du prochain handover. En effet, grâce à l'entrainement, le premier modèle de prédiction a pu établir des corrélations entre une position, une vitesse et une direction d'un véhicule, et la localisation d'une prochaine déconnexion. Le modèle de prédiction utilise ces corrélations pour prédire la localisation à laquelle le véhicule sera déconnecté de la cellule courante en fonction d'une localisation, une vitesse et une direction d'un nouveau véhicule.

Selon une réalisation particulière, le serveur applique les données reçues au deuxième modèle de prédiction lors d'une étape 206. Le serveur détermine le deuxième modèle de prédiction associé au point d'accès auquel le véhicule est connecté et applique ce modèle aux données transmises par le véhicule. Selon une réalisation particulière, lorsque la position du véhicule est transmise sous la forme d'une longitude et d'une latitude, et lorsque le premier modèle de prédiction a été entrainé à partir de localisations relatives à un point d'accès, le serveur effectue au préalable une requête vers une base de données afin d'obtenir la localisation du point d'accès auquel le véhicule est connecté et converti la position du véhicule en coordonnées polaires relatives à ce point d'accès.

L'application du deuxième modèle de prédiction, entrainé à l'étape 202, à ces données, permet au serveur de prédire un identifiant du prochain point d'accès auquel le véhicule sera connecté après une déconnexion. Plus précisément, le deuxième modèle étant un modèle de classification, il permet au serveur d'obtenir une sortie un ou plusieurs points auquel le véhicule est susceptible de se connecter après la déconnexion, chacun des points d'accès potentiels étant associés par le modèle de prédiction à une probabilité. Ainsi, en référence à la figure 1, le modèle peut par exemple prédire que le prochain point d'accès est le point d'accès 105 avec une probabilité de 0.8 ou le point d'accès 108 avec une probabilité de 0.2. Grâce à l'entrainement, le deuxième modèle de prédiction a pu établir des corrélations entre une position, une vitesse et une direction d'un véhicule, et un identifiant d'un prochain point d'accès. Le modèle de prédiction utilise ces corrélations pour prédire l'identifiant du prochain point d'accès pour une localisation, une vitesse et une direction d'un nouveau véhicule.

Enfin, à l'étape 207, le serveur 110 transmet le résultat des prédictions au véhicule en ayant fait la requête. Le véhicule peut utiliser l'identifiant prédit pour déterminer qu'il va entrer dans une zone blanche et anticiper un téléchargement de données, ou encore pour déterminer qu'il sera bientôt connecté à un point d'accès haut débit et différer l'accès à des données volumineuses.

La figure 4 représente l'architecture d'un dispositif 400 adapté pour mettre en oeuvre le procédé de prédiction d'une caractéristique associée à une prochaine modification des conditions d'attachement audit réseau cellulaire selon un mode de réalisation particulier.

Le dispositif 400 comprend un espace de stockage 401, par exemple une mémoire MEM, une unité de traitement 403 équipée par exemple d'un processeur PROC. L'unité de traitement peut être piloté par un programme 402, par exemple un programme d'ordinateur PGR, mettant en oeuvre le procédé de prédiction décrit en référence aux figures 1 et 2, et notamment les étapes :
- D'entrainement d'un premier modèle de prédiction associé à un point d'accès courant à partir de données participatives collectées auprès d'au moins un véhicule d'entrainement, les données participatives comprenant au moins pour une localisation d'un véhicule d'entrainement connecté à un point d'accès cellulaire courant une première localisation, une vitesse et une direction du véhicule d'entrainement, et une seconde localisation du véhicule d'entrainement, collectée lorsqu'une déconnexion du point d'accès courant est détectée,
- De prédiction d'une troisième localisation à laquelle un second véhicule sera déconnecté du point d'accès courant lors de son déplacement sur ledit réseau routier par application du modèle de prédiction à une localisation, une vitesse et une direction du véhicule.

Selon un mode particulier de réalisation, le programme d'ordinateur PGR est en outre configuré pour mettre en oeuvre les étapes :
- D'entrainement d'un second modèle de prédiction à partir de données participatives collectées auprès d'au moins un véhicule d'entrainement, les données comprenant au moins, pour une localisation d'un véhicule d'entrainement connecté à un point d'accès cellulaire courant une localisation, une vitesse et une direction du véhicule d'entrainement, et un identifiant d'un second point d'accès cellulaire obtenu après la détection de sa déconnection du point d'accès courant,
- De prédiction d'un identifiant d'un prochain point d'accès cellulaire pour la connexion d'un véhicule connecté au point d'accès courant par application du second modèle de prédiction à une localisation, une vitesse et une direction du véhicule.

A l'initialisation, les instructions du programme d'ordinateur 402 sont par exemple chargées dans une mémoire RAM (Random Access Memory) avant d'être exécutées par le processeur de l'unité de traitement 403. Le processeur de l'unité de traitement 403 met en oeuvre les étapes du procédé de prédiction selon les instructions du programme d'ordinateur 402.

Pour cela, le dispositif 400 comprend, outre la mémoire 401, des moyens de communication 405 (COM) permettant au dispositif de se connecter à un réseau de communication et d'échanger des données avec d'autres dispositifs par l'intermédiaire du réseau de télécommunications, et en particulier de recevoir, en provenance d'au moins un véhicule d'entrainement connecté à un point d'accès particulier, des données participatives comprenant au moins pour une localisation d'un véhicule d'entrainement connecté à un point d'accès cellulaire courant une première localisation, une vitesse et une direction du véhicule d'entrainement, et une seconde localisation du véhicule d'entrainement, collectée lorsqu'une perte de connexion au point d'accès courant est détectée. Le module de communication est configuré pour obtenir un identifiant d'un point d'accès auquel le véhicule est connecté, par exemple un identifiant de cellule, ou, lorsqu'aucune connexion n'est disponible, un identifiant unique associé à une zone blanche.

Les moyens de communication 405 sont par exemple une interface réseau, comme une interface Wifi, Ethernet, ATM, fibre optique, etc. adaptée pour échanger des données conformément à un protocole de communication tel que le protocole TCP/IP.

Le dispositif 400 comprend un premier module de prédiction 406. Le module de prédiction 406 est par exemple un réseau de neurones artificiels de régression mis en oeuvre par le processeur 403 selon des instructions de programme d'ordinateur enregistrées dans la mémoire 401.

Le dispositif 400 comprend aussi un premier module d'entrainement 407. Le module 407 est par exemple mis en oeuvre par des instructions de programme d'ordinateur enregistrées dans la mémoire 401 et configurées pour entrainer le module de prédiction 406 à partir de données d'entrainement reçues par le module de communication 405, en particulier à partir d'une localisation, d'une vitesse et d'une direction du véhicule d'entrainement, et d'une seconde localisation du véhicule d'entrainement, collectée lorsqu'une déconnexion du point d'accès courant est détectée. En particulier, les instructions sont configurées pour obtenir les données d'entrainements reçues par le module de communication 405, de les soumettre au modèle de prédiction 406 sous la forme d'un vecteur de caractéristiques.

Le dispositif 400 comprend également un premier module de prédiction 408, adapté pour appliquer le modèle de prédiction 406 à une localisation, une vitesse et une direction transmises par un véhicule et reçue par le module de communication 405. Le module de prédiction 408 est par exemple mis en oeuvre par des instructions de programme d'ordinateur configurées, lorsqu'elles sont exécutées par le processeur 403, pour obtenir une localisation, une vitesse et une direction transmises par un véhicule auprès du module de communication 405 et soumettre ces données au modèle de prédiction 406 sous la forme d'un vecteur de caractéristiques afin d'obtenir en retour une localisation d'une prochaine déconnexion de la cellule courante.

Selon une réalisation particulière, le dispositif 400 comprend un deuxième module de prédiction 409. Le module de prédiction 409 est par exemple un réseau de neurones artificiels de classification mis en oeuvre par le processeur 403 selon des instructions de programme d'ordinateur enregistrées dans la mémoire 401.

Selon une réalisation particulière, le dispositif 400 comprend aussi un deuxième module d'entrainement 410. Le module 410 est par exemple mis en oeuvre par des instructions de programme d'ordinateur enregistrées dans la mémoire 401 et configurées pour entrainer le module de prédiction 409 à partir de données d'entrainement reçues par le module de communication 405, en particulier à partir d'une localisation, d'une vitesse et d'une direction du véhicule d'entrainement, et d'un identifiant d'un prochain point d'accès, collectée lorsqu'une déconnexion du point d'accès courant est détectée. En particulier, les instructions sont configurées pour obtenir les données d'entrainements reçues par le module de communication 405, de les soumettre au modèle de prédiction 409 sous la forme d'un vecteur de caractéristiques.

Selon un mode particulier de réalisation, le dispositif 400 comprend également un premier module de prédiction 411, adapté pour appliquer le modèle de prédiction 409 à une localisation, une vitesse et une direction transmises par un véhicule et reçue par le module de communication 405. Le module de prédiction 411 est par exemple mis en oeuvre par des instructions de programme d'ordinateur configurées, lorsqu'elles sont exécutées par le processeur 403, pour obtenir une localisation, une vitesse et une direction transmises par un véhicule auprès du module de communication 405 et soumettre ces données au modèle de prédiction 406 sous la forme d'un vecteur de caractéristiques afin d'obtenir en retour une prédiction d'un identifiant d'un prochain point d'accès.

Le module de communication 405 est en outre configuré pour transmettre les prédictions réalisées par les modules 411 et 408 à un véhicule connecté au point d'accès auquel sont associés les modèles de prédictions 409 et 406.

Selon une réalisation particulière, le dispositif est intégré dans un serveur.

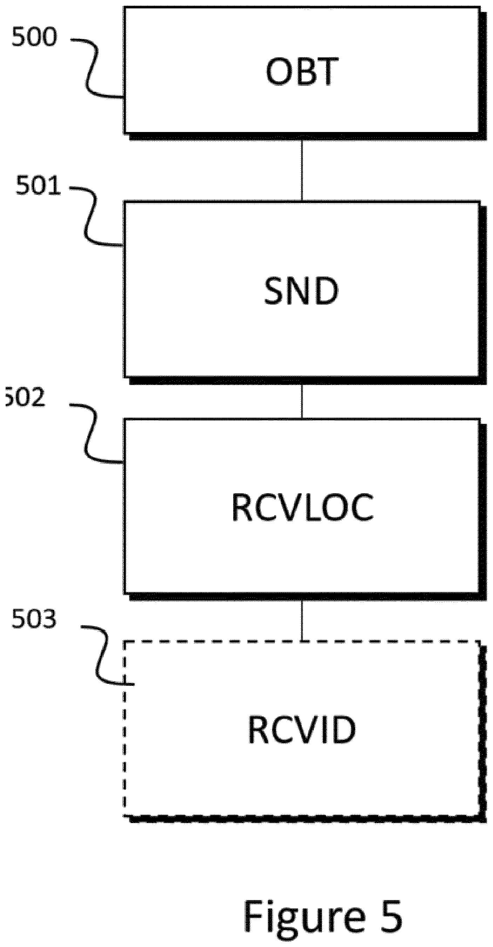

La figure 5 représente les principales étapes d'un procédé d'obtention d'une caractéristique d'une prochaine modification des conditions d'attachement à un réseau cellulaire, selon une réalisation particulière de l'invention.

Selon un mode de réalisation particulier, le procédé est mis en oeuvre par un dispositif embarqué dans un véhicule, le dispositif comprenant une interface de communication, une mémoire et un processeur configuré par des instructions enregistrées dans la mémoire. Les instructions sont configurées pour mettre en oeuvre, lorsqu'elles sont exécutées par le processeur, les étapes 500 à 503 du procédé d'obtention qui va maintenant être décrit.

Lors d'une première étape 500, le dispositif obtient la position, la vitesse et la direction du véhicule dans lequel il est embarqué à partir d'un dispositif de localisation par satellite. Le dispositif obtient en outre un identifiant du point d'accès courant auquel le véhicule est connecté au moyen d'une interface de communication cellulaire. La donnée de localisation correspond par exemple à une longitude et une latitude, mais peut aussi être une donnée de localisation relative à l'emplacement du point d'accès auquel le véhicule est connecté. Il s'agit par exemple de coordonnées polaires comportant un angle et une distance par rapport au point d'accès.

A l'étape 501, le dispositif transmet la localisation, la vitesse et la direction obtenue, ainsi que l'identifiant du point d'accès auquel il est connecté à un serveur mettant en oeuvre le procédé de prédiction tel que décrit en référence à la figure 2.

Le dispositif reçoit lors d'une étape 502 une donnée de localisation correspondant à une localisation géographique à laquelle le dispositif sera déconnecté de la cellule courante, prédite par le serveur de prédiction par application du premier modèle de prédiction à la localisation, la vitesse et la direction transmise au serveur.

Selon une réalisation particulière, le dispositif reçoit en outre lors d'une étape 503 une prédiction d'un identifiant de point d'accès associé à une zone dans laquelle le véhicule entrera lorsqu'il aura dépassé la localisation prédite sur le réseau routier, par application du deuxième modèle de prédiction à la localisation, la vitesse et la direction transmise au serveur. L'identifiant de point d'accès prédit peut être un identifiant de cellule ou de zone blanche.

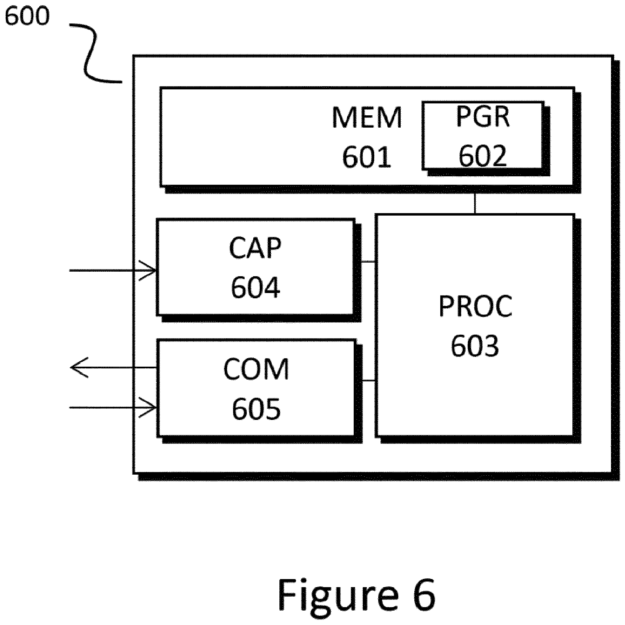

La figure 6 représente l'architecture d'un dispositif 600 adapté pour mettre en oeuvre le procédé d'obtention selon un mode de réalisation particulier.

Le dispositif 600 comprend un espace de stockage 601, par exemple une mémoire MEM, une unité de traitement 603 équipée par exemple d'un processeur PROC. L'unité de traitement peut être piloté par un programme 602, par exemple un programme d'ordinateur PGR, mettant en oeuvre le procédé d'obtention décrit en référence à la figure 5, et notamment les étapes d'obtention d'une localisation, d'une vitesse, d'une direction d'un véhicule auquel le dispositif est associé et d'un identifiant d'un point d'accès auquel le véhicule est connecté, de transmission de la localisation, de la vitesse et de la direction du véhicule vers un serveur de prédiction tel que décrit précédemment, comprenant un premier modèle de prédiction associé au point d'accès courant, et de réception d'une localisation géographique d'une déconnexion prédite par un serveur de prédiction tel que décrit précédemment, par application du premier modèle de prédiction aux données transmises.

Selon une réalisation particulière, le programme d'ordinateur PGR met également en oeuvre une étape de réception d'un identifiant de point d'accès auquel le véhicule sera connecté après un transfert intercellulaire ou d'un identifiant de zone blanche, l'identifiant étant prédit par un serveur de prédiction tel que décrit précédemment, par application d'un second modèle de prédiction aux données transmises.

A l'initialisation, les instructions du programme d'ordinateur 602 sont par exemple chargées dans une mémoire RAM (Random Access Memory) avant d'être exécutées par le processeur de l'unité de traitement 603. Le processeur de l'unité de traitement 603 met en oeuvre les étapes du procédé de prédiction selon les instructions du programme d'ordinateur 602.

Pour cela, le dispositif 600 comprend, outre la mémoire 601, un module d'acquisition de données 604 adapté pour obtenir, à partir d'un dispositif de localisation satellite tel qu'un GPS, et/ou de capteurs, une localisation, une vitesse et une direction suivie par un véhicule dans lequel le dispositif est embarqué. Selon une réalisation particulière, le module d'acquisition 604 comprend un dispositif de localisation permettant d'obtenir directement ces données.

Le dispositif 600 comprend également un module de communication 605 (COM). Le module de communication 605 est par exemple une interface réseau de type 2G, 3G, LTE, etc. pilotée par le processeur 603 selon les instructions du programme PGR et adaptée pour établir des communications et échanger des messages avec des équipements au travers d'un réseau de communication. Le module de communication 05 est en particulier adapté pour transmettre, selon une protocole de communication tel que TCP/IP, au moins une localisation, une vitesse et une direction suivie par un véhicule à un serveur de prédiction mettant en oeuvre le procédé décrit ci-avant, et pour recevoir en réponse une localisation géographique d'une déconnexion prédite par un serveur de prédiction tel que décrit précédemment, par application du premier modèle de prédiction aux données transmises, et/ou un identifiant de point d'accès auquel le véhicule sera connecté après un transfert intercellulaire ou de zone blanche, l'identifiant étant prédit par un serveur de prédiction tel que décrit précédemment, par application d'un second modèle de prédiction aux données transmises.

Selon un mode particulier de réalisation, le dispositif est intégré dans un véhicule et comprend un écran adapté pour afficher, en combinaison avec une cartographie du réseau routier, une distance à parcourir avant que le véhicule soit déconnecté du point d'accès courant et/ou des caractéristiques de connexion à un réseau cellulaire une fois ladite distance parcourue.

## Revendications

1. Procédé de prédiction, pour un véhicule connecté à un point d'accès à un réseau cellulaire courant circulant sur un réseau routier, d'au moins une caractéristique associée à une modification des conditions d'attachement du véhicule audit réseau cellulaire, le procédé comprenant les étapes suivantes :
- Entrainer (200, 201) un premier modèle de prédiction associé au point d'accès courant à partir de données participatives collectées auprès d'au moins un véhicule d'entrainement, comprenant au moins pour une localisation d'un véhicule d'entrainement connecté à un point d'accès cellulaire courant :
∘ Une première localisation, une vitesse et une direction du véhicule d'entrainement, et
∘ Une seconde localisation du véhicule d'entrainement, collectée lorsqu'une déconnexion du point d'accès courant est détectée,
- Prédire (204, 205) une troisième localisation à laquelle le véhicule sera déconnecté du point d'accès courant lors de son déplacement sur ledit réseau routier par application du modèle de prédiction à :
∘ Une localisation, une vitesse et une direction du véhicule,
Le procédé étant **caractérisé en ce que** les localisations de véhicules sont des localisations relatives au point d'accès courant.

2. Procédé selon la revendication 1 dans lequel le premier modèle de prédiction est un réseau de neurones perceptron multicouche de régression.

3. Procédé selon la revendication 1 ou 2 tel qu'il comporte en outre les étapes suivantes :
- Entrainer (202) un second modèle de prédiction à partir de données participatives collectées auprès d'au moins un véhicule d'entrainement, les données comprenant au moins, pour une localisation d'un véhicule d'entrainement connecté à un point d'accès cellulaire courant:
∘ Une localisation, une vitesse et une direction du véhicule d'entrainement, et
∘ Un identifiant d'un second point d'accès cellulaire obtenu après la détection de sa déconnexion du point d'accès courant,
- Prédire (206) un identifiant d'un prochain point d'accès cellulaire par application du second modèle de prédiction à :
∘ Une localisation, une vitesse et une direction du véhicule.

4. Procédé selon la revendication 3 dans lequel le second modèle de prédiction est un réseau de neurones perceptron multicouche de classification.

5. Dispositif de prédiction, pour un véhicule connecté à un point d'accès à un réseau cellulaire courant circulant sur un réseau routier, d'au moins une caractéristique associée à une prochaine modification des conditions d'attachement audit réseau cellulaire, le dispositif comportant une mémoire (401) et un processeur (403) configuré par des instructions (402) enregistrées dans la mémoire, lesdites instructions étant configurées pour mettre en oeuvre
- Un module d'entrainement (407) d'un premier modèle de prédiction (406) associé au point d'accès courant à partir de données participatives collectées auprès d'au moins un véhicule d'entrainement, comprenant au moins pour une localisation d'un véhicule d'entrainement connecté à un point d'accès cellulaire courant :
∘ Une première localisation, une vitesse et une direction du véhicule d'entrainement, et
∘ Une seconde localisation du véhicule d'entrainement, collectée lorsqu'une déconnexion depuis le point d'accès courant est détecté,
- Un module de prédiction (408) d'une troisième localisation à laquelle le véhicule sera déconnecté du point d'accès courant lors de son déplacement sur ledit réseau routier par application du modèle de prédiction à :
∘ Une localisation, une vitesse et une direction du véhicule,
Le dispositif étant **caractérisé en ce que** les localisations de véhicules sont des localisations relatives au point d'accès courant.

6. Dispositif selon la revendication 5 dans lequel les instructions enregistrées dans la mémoire sont en outre configurées pour mettre en oeuvre :
- Un module d'entrainement (410) d'un second modèle de prédiction (409) à partir de données participatives collectées auprès d'au moins un véhicule d'entrainement, les données comprenant au moins, pour une localisation d'un véhicule d'entrainement connecté à un point d'accès cellulaire courant:
∘ Une localisation, une vitesse et une direction du véhicule d'entrainement, et
∘ Un identifiant d'un second point d'accès cellulaire obtenu après la détection de sa déconnexion du point d'accès courant,
- Un module de prédiction (411) d'un identifiant d'un prochain point d'accès cellulaire par application du second modèle de prédiction à :
∘ Une localisation, une vitesse et une direction du véhicule.

## Patentansprüche

1. Verfahren zur Vorhersage, für ein Fahrzeug, das mit einem aktuellen Zugangspunkt zu einem zellularen Netzwerk verbunden ist und auf einem Straßennetz fährt, mindestens einer Eigenschaft, die mit einer Modifizierung der Verknüpfungsbedingungen des Fahrzeugs mit dem zellularen Netzwerk assoziiert ist, wobei das Verfahren die folgenden Schritte beinhaltet:
- Trainieren (200, 201) eines ersten Vorhersagemodells, das mit dem aktuellen Zugangspunkt assoziiert ist, mit Hilfe von partizipativen Daten, die von mindestens einem Trainingsfahrzeug erfasst werden und die für einen Standort eines Trainingsfahrzeugs, das mit einem aktuellen zellularen Zugangspunkt verbunden ist, mindestens Folgendes beinhalten:
∘ einen ersten Standort, eine Geschwindigkeit und eine Richtung des Trainingsfahrzeugs und
∘ einen zweiten Standort des Trainingsfahrzeugs, der erfasst wird, wenn eine Trennung von dem aktuellen Zugangspunkt detektiert wird,
- Vorhersagen (204, 205) eines dritten Standorts, an dem das Fahrzeug während seiner Fortbewegung auf dem Straßennetz von dem aktuellen Zugangspunkt getrennt wird, durch Anwenden des Vorhersagemodells auf Folgendes:
∘ einen Standort, eine Geschwindigkeit und eine Richtung des Fahrzeugs,
wobei das Verfahren **dadurch gekennzeichnet ist, dass** die Standorte von Fahrzeugen Standorte relativ zu dem aktuellen Zugangspunkt sind.

2. Verfahren nach Anspruch 1, wobei das erste Vorhersagemodell ein neuronales Netz vom Typ mehrschichtiges Regressions-Perzeptron ist.

3. Verfahren nach Anspruch 1 oder 2, derart, dass es ferner die folgenden Schritte umfasst:
- Trainieren (202) eines zweiten Vorhersagemodells mit Hilfe von partizipativen Daten, die von mindestens einem Trainingsfahrzeug erfasst werden, wobei die Daten für einen Standort eines Trainingsfahrzeugs, das mit einem aktuellen zellularen Zugangspunkt verbunden ist, mindestens Folgendes beinhalten:
∘ einen Standort, eine Geschwindigkeit und eine Richtung des Trainingsfahrzeugs und
∘ eine Kennung eines zweiten zellularen Zugangspunktes, die nach der Detektion seiner Trennung von dem aktuellen Zugangspunkt erhalten wird,
- Vorhersagen (206) einer Kennung eines zukünftigen zellularen Zugangspunktes durch Anwenden des zweiten Vorhersagemodells auf:
∘ einen Standort, eine Geschwindigkeit und eine Richtung des Fahrzeugs.

4. Verfahren nach Anspruch 3, wobei das zweite Vorhersagemodell ein neuronales Netz vom Typ mehrschichtiges Klassifizierungs-Perzeptron ist.

5. Vorrichtung zur Vorhersage, für ein Fahrzeug, das mit einem aktuellen Zugangspunkt zu einem zellularen Netzwerk verbunden ist und auf einem Straßennetz fährt, mindestens einer Eigenschaft, die mit einer zukünftigen Modifizierung der Verknüpfungsbedingungen mit dem zellularen Netzwerk assoziiert ist, wobei die Vorrichtung einen Speicher (401) und einen Prozessor (403), der durch in dem Speicher aufgezeichnete Anweisungen (402) konfiguriert ist, umfasst, wobei die Anweisungen zur Implementierung von Folgendem konfiguriert sind:
- eines Moduls zum Trainieren (407) eines ersten Vorhersagemodells (406), das mit dem aktuellen Zugangspunkt assoziiert ist, mit Hilfe von partizipativen Daten, die von mindestens einem Trainingsfahrzeug erfasst werden und die für einen Standort eines Trainingsfahrzeugs, das mit einem aktuellen zellularen Zugangspunkt verbunden ist, mindestens Folgendes beinhalten:
∘ einen ersten Standort, eine Geschwindigkeit und eine Richtung des Trainingsfahrzeugs und
∘ einen zweiten Standort des Trainingsfahrzeugs, der erfasst wird, wenn eine Trennung von dem aktuellen Zugangspunkt detektiert wird,
- eines Moduls zur Vorhersage (408) eines dritten Standorts, an dem das Fahrzeug während seiner Fortbewegung auf dem Straßennetz von dem aktuellen Zugangspunkt getrennt wird, durch Anwenden des Vorhersagemodells auf Folgendes:
∘ einen Standort, eine Geschwindigkeit und eine Richtung des Fahrzeugs,
wobei die Vorrichtung **dadurch gekennzeichnet ist, dass** die Standorte von Fahrzeugen Standorte relativ zu dem aktuellen Zugangspunkt sind.

6. Vorrichtung nach Anspruch 5, wobei die in dem Speicher aufgezeichneten Anweisungen ferner zur Implementierung von Folgendem konfiguriert sind:
- eines Moduls zum Trainieren (410) eines zweiten Vorhersagemodells (409) mit Hilfe von partizipativen Daten, die von mindestens einem Trainingsfahrzeug erfasst werden, wobei die Daten für einen Standort eines Trainingsfahrzeugs, das mit einem aktuellen zellularen Zugangspunkt verbunden ist, mindestens Folgendes beinhalten:
∘ einen Standort, eine Geschwindigkeit und eine Richtung des Trainingsfahrzeugs und
∘ eine Kennung eines zweiten zellularen Zugangspunktes, die nach der Detektion seiner Trennung von dem aktuellen Zugangspunkt erhalten wird,
- eines Moduls zur Vorhersage (411) einer Kennung eines zukünftigen zellularen Zugangspunktes durch Anwenden des zweiten Vorhersagemodells auf:
∘ einen Standort, eine Geschwindigkeit und eine Richtung des Fahrzeugs.

## Claims

1. Method for predicting, for a vehicle that is connected to an access point to a current cellular network and is travelling on a road network, at least one characteristic associated with a modification of the linkage conditions of the vehicle to said cellular network, the method comprising the following steps:
- training (200, 201) a first prediction model associated with the current access point from crowdsourced data collected from at least one training vehicle, comprising at least, for locating a training vehicle connected to a current cellular access point:
∘ a first location, a speed and a direction of the training vehicle, and
∘ a second location of the training vehicle, collected when a disconnection from the current access point is detected,
- predicting (204, 205) a third location at which the vehicle will be disconnected from the current access point while travelling on said road network by applying the prediction model to:
∘ a location, a speed and a direction of the vehicle, the method being **characterized in that** the vehicle locations are locations relative to the current access point.

2. Method according to Claim 1, wherein the first prediction model is a regression multilayer perceptron neural network.

3. Method according to Claim 1 or 2, such that it further comprises the following steps:
- training (202) a second prediction model from crowdsourced data collected from at least one training vehicle, the data comprising at least, for locating a training vehicle connected to a current cellular access point:
∘ a location, a speed and a direction of the training vehicle, and
∘ an identifier of a second cellular access point obtained after detecting its disconnection from the current access point,
- predicting (206) an identifier of a next cellular access point by applying the second prediction model to:
∘ a location, a speed and a direction of the vehicle.

4. Method according to Claim 3, wherein the second prediction model is a classification multilayer perceptron neural network.

5. Device for predicting, for a vehicle that is connected to an access point to a current cellular network and is travelling on a road network, at least one characteristic associated with a next modification of the linkage conditions to said cellular network, the device comprising a memory (401) and a processor (403) which is configured by instructions (402) stored in the memory, said instructions being configured to implement:
- a module (407) for training a first prediction model (406) associated with the current access point from crowdsourced data collected from at least one training vehicle, comprising at least, for locating a training vehicle connected to a current cellular access point:
∘ a first location, a speed and a direction of the training vehicle, and
∘ a second location of the training vehicle, collected when a disconnection from the current access point is detected,
- a module (408) for predicting a third location at which the vehicle will be disconnected from the current access point while travelling on said road network by applying the prediction model to:
∘ a location, a speed and a direction of the vehicle, the device being **characterized in that** the vehicle locations are locations relative to the current access point.

6. Device according to Claim 5, wherein the instructions stored in the memory are further configured to implement:
- a module (410) for training a second prediction model (409) from crowdsourced data collected from at least one training vehicle, the data comprising at least, for locating a training vehicle connected to a current cellular access point:
∘ a location, a speed and a direction of the training vehicle, and
∘ an identifier of a second cellular access point obtained after detecting its disconnection from the current access point,
- a module (411) for predicting an identifier of a next cellular access point by applying the second prediction model to:
∘ a location, a speed and a direction of the vehicle.
